# EUROPÄISCHE PATENTSCHRIFT

(11) **EP 3 386 736 B1**
(45) Veröffentlichungstag und Bekanntmachung des Hinweises auf die Patenterteilung: **05.02.2020**
(21) Anmeldenummer: 16825340.9
(22) Anmeldetag: 12.12.2016
(51) Int. Cl.: B29C 70/40, B29C 70/08, B29C 70/88, B32B 15/092, B32B 15/14

(54) **VERFAHREN ZUR HERSTELLUNG EINES HALBZEUGS ODER BAUTEILS AUS METALL UND FASERVERBUND**
METHOD FOR PRODUCING A SEMI-FINISHED PART OR COMPONENT FROM METAL AND COMPOSITE
PROCEDE DE FABRICATION D'UN SEMI-PRODUIT OU COMPOSANT EN METAL ET COMPOSITE

(30) Priorität: 11.12.2015 EP 15199680
(43) Veröffentlichungstag der Anmeldung: 17.10.2018
(73) Patentinhaber: voestalpine Stahl GmbH, 4020 Linz (AT); voestalpine Metal Forming GmbH, 3500 Krems an der Donau (AT)
(72) Erfinder: EYSSELL, Carola, 4225 Luftenberg (AT); HEINRITZ, Rüdiger, 73527 Schwäbisch Gmünd (DE); KELSCH, Reiner, 73557 Mutlangen (DE); MAYRHOFER, Gerhard, 4121 Altenfelden (AT); ROUET, Christian, 3494 Gedersdorf (AT); RIEGLER, Johannes, 4611 Buchkirchen (AT)
(74) Vertreter: Jell, Friedrich
(86) Internationale Anmeldenummer: PCT/EP2016/080705
(87) Internationale Veröffentlichungsnummer: WO 2017/098060

(56) Entgegenhaltungen:
- EP-A1- 2 647 486
- WO-A1-2015/052352
- DE-A1-102014 001 132
- US-A1- 2013 340 928
- M ; Wacker ET AL: "Sonderdrucke Härtung von Reaktionsharzen Time-Temperature-Transition-Diagramm", , 18. Juli 2013 (2013-07-18), XP055276610, Erlangen Gefunden im Internet: URL:http://www.lkt.uni-erlangen.de/publika tionen/online-aufsaetze/ttt.pdf [gefunden am 2016-05-31]

## Beschreibung

### Technisches Gebiet

Die Erfindung betrifft ein Verfahren zur Herstellung eines Halbzeugs oder Bauteils gemäß Anspruch 1, bei dem ein als Blech oder Platine ausgebildeter Metallträger mit mindestens einem Prepreg, aufweisend eine thermisch vernetzbare, duroplastische Matrix mit Endlosfasern, belegt, die duroplastische Matrix des Prepregs durch Erwärmen vorvernetzt und der mit dem vorvernetzten Prepreg belegte Metallträger zu einem Halbzeug oder Bauteil durch Tiefziehen oder Strecktiefziehen umgeformt wird.

### Stand der Technik

Um einen Metallträger, nämlich einen Blechzuschnitt bzw. eine Blechplatine, verstärkt mit Prepregs, die eine duroplastische Matrix mit Endlosfasern aufweisen, möglichst beschädigungsfrei einem Umformverfahren, insbesondere Tiefziehen, unterwerfen zu können, ist es aus dem Stand der Technik bekannt (WO2013/153229A1), die plastischen Verformungen am Metallträger in die beschichtungsfreien Bereiche des Metallträgers zu verlagern. Demnach bestehen beschichtungsfreie Bereiche am Halbzeug oder Bauteil, was solche FVK-verstärkten Halbzeuge bzw. Bauteile hinsichtlich ihres Leichtbaupotentials und damit ihrer Anwendungsmöglichkeiten einschränkt. Hinzu kommt, dass durch diese Flächenbeschränkung auch die Faserlänge der Prepregs eingeschränkt wird, was zu reduzierter Steifigkeit und Festigkeit führen kann. Zudem zeigte sich bei Halbzeugen oder Bauteilen, die aus Blechzuschnitten mit drucklos bis zur Blockfestigkeit ausgehärteten Prepregs tiefgezogen wurden, die Tendenz zur Delamination und/oder zu einer erhöhten Porosität im endvernetzten Faserverbundmaterial - was unter anderem die Reproduzierbarkeit des Verfahrens beeinträchtigt.

Außerdem sind ein Formpressverfahren aus der EP2647486A1, ein Umformverfahren aus der US20130340928A1 und ein Tiefziehen aus der WO2015/052352A1 bekannt.

### Darstellung der Erfindung

Die Erfindung hat sich daher die Aufgabe gestellt, ein Verfahren der eingangs geschilderten Art hinsichtlich seiner Einfachheit, Anwendungsmöglichkeiten und auch in seiner Reproduzierbarkeit zu verbessern. Zudem soll ein Verfahren mit geringer Zykluszeit ermöglicht werden.

Die Erfindung löst die gestellte Aufgabe dadurch, dass beim Vorvernetzen der duroplastischen Matrix des Prepregs dessen Matrix in einen ihrem Viskositätsminimum nachfolgenden Viskositätszustand übergeführt und noch vor Erreichen ihres Gelierpunkts das Prepreg gemeinsam mit dem Metallträger umgeformt wird.

Wird beim Vorvernetzen der duroplastischen Matrix des Prepregs dessen Matrix in einen ihrem Viskositätsminimum nachfolgenden Viskositätszustand übergeführt und noch vor Erreichen ihres Gelierpunkts das Prepreg gemeinsam mit dem Metallträger umgeformt wird, kann dadurch nicht nur eine plastische Formänderung am Metallträger in dessen faserverstärkten Bereichen zugelassen, sondern auch die Reproduzierbarkeit des Verfahrens deutlich verbessert werden. Das sich in diesem Zustand befindliche Prepreg kann nämlich den Umformradien entsprechende, relative Bewegungen zwischen seinen Endlosfasen und dem Metallträger zulassen. Somit kann selbst engen Biegeradien am Blechzuschnitt gefolgt werden, ohne mit einem Bruch oder einer Delamination rechnen zu müssen. Das erfindungsgemäße Verfahren ist daher besonders vielseitig anwendbar. Überraschend konnte zudem erreicht werden, dass durch das gemeinsame Umformen das Kompaktieren des Matrixmaterials mit der Faserstruktur der Endlosfasern erheblich verbessert werden kann. Die vergleichsweise kurze Kraftbeaufschlagung, insbesondere Druckbeaufschlagung, beim Umformen kann genutzt werden, die Porosität im Faserverbund zu verringern - womit die Laminatqualität erhöhbar und die Gefahr einer Delamination der Faserverstärkung am Blechzuschnitt weiter reduzierbar ist. Erfindungsgemäß kann daher durch das Überführen der Matrix in einen ihrem Viskositätsminimum nachfolgenden Viskositätszustand und dem Umformen des Prepregs gemeinsam mit dem Metallträger noch vor Erreichen des Gelierpunkts der Matrix die Reproduzierbarkeit des Verfahren erheblich verbessert werden. Zudem ist es möglich, durch das gemeinsame Umformen von Prepreg und Metallträger einen besonders schnellen Verfahrensablauf mit geringer Zykluszeit zu Verfügung zu stellen. Außerdem bedarf es das erfindungsgemäße Verfahren im Vergleich mit anderen bekannten Verfahren zur Herstellung von Faserverbund-Halbzeugen oder -Bauteilen keiner aufwendigen und/oder komplex handhabbaren Anlagentechnik - was neben einer Reduzierung der Kosten für das erfindungsgemäße Verfahren auch eine Verbesserung seiner Reproduzierbarkeit bedeutet.

Im Allgemeinen wird erwähnt, dass der Metallträger aus Blechen mit einem Eisen-, Aluminium- oder Magnesiumwerkstoff, aus einem Leichtmetall oder dergleichen bzw. aus Legierungen aus diesen bestehen kann. Als Metallträger kann sich ein Stahlblech mit oder ohne Schutzschicht, beispielsweise auf Zinkbasis, auszeichnen. Im Allgemeinen wird weiter erwähnt, dass die duroplastische Kunststoffmatrix eine Kombination mit anorganischen oder organischen Verstärkungsfasern, wie z. B. Glas, Basalt, Kohlenstoff oder Aramid aufweisen kann. Zudem ist das Belegen des Metallträgers mit mehreren Prepregs nebeneinander als auch eine Stapelung von Prepregs (einlagig oder mehrlagig) auf dem Metallträger denkbar. Die im Prepreg enthaltenen Fasern können als reine unidirektionale Schicht vorliegen. Damit kann mit mehrlagigen Prepregs ein unidirektionales oder multidirektionales Laminat am Metallträger geschaffen werden.

Außerdem wird im Allgemeinen festgehalten, dass eine duroplastische Kunststoffmatrix auch modifizierte duroplastische Polymerblends aufweisen kann, welche vorzugsweise aus nicht zwangsweise miteinander vernetzten Phasen aus Epoxid- und Polyurethanphasen bestehen. Bekannte prozentuale Zusammensetzungen solch eines PU-Epoxy-Blends sind, beispielsweise 5 bis 25 Teile primärer Polyurethanphase in umgebender Epoxymatrix.

Im Allgemeinen wird weiter erwähnt, dass die Viskosität der Matrix mit einem Rheometer, nämlich Viskosimeter Anton Paar MCR 301 unter Oszillation (z.B.: Platte-Platte-Konfiguration, Durchmesser 25 mm; Spalt 1000µm; Amplitude 0,5%; Kreisfrequenz 10 rad/s), ausgewertet nach ASTM D 4473 08/2016 bestimmt wird.

Um die Gefahr eines unerwünschten Ausquetschens aus dem Prepreg der über dem Viskositätsminium erwärmten duroplastischen Matrix beim Umformen zu reduzieren, kann vorgesehen sein, dass vor dem Umformen der Vernetzungsgrad der duroplastischen Matrix auf 4 bis 15 % eingestellt wird (z.B.: durch Temperatur und/oder Zeit).

Besonders vorteilhaft kann sein, wenn beim Umformen der Vernetzungsgrad der duroplastischen Matrix auf 20 bis 45 % eingestellt wird (z.B.: durch Temperatur und/oder Zeit). Dadurch ist nämlich die Gefahr eines unerwünschten Ausquetschens der duroplastischen Matrix beim Umformen zusätzlich reduzierbar. Auch kann bei solch einem Vernetzungsgrad die Druckbelastung auf das Prepreg beim Umformen für optimale Bedingungen zur Erreichung einer erhöhten Laminatqualität des Prepregs sorgen. Zudem kann dies auch der Haftfestigkeit zwischen den Werkstoffpartnern dienlich sein.

Besonders vorteilhaft kann sein, wenn beim Umformen der Vernetzungsgrad der duroplastischen Matrix auf 25 bis 40 % eingestellt wird (z.B.: durch Temperatur und/oder Zeit).

Wird beim Umformen die duroplastische Matrix auf 120 bis 220°C erwärmt, kann die Vernetzung beschleunigt werden - womit das Umformen schneller erfolgen kann bzw. die Zykluszeit des Verfahrens verringert werden.

Besonders vorteilhaft kann sein, wenn beim Umformen die duroplastische Matrix auf 150 bis 180°C erwärmt wird.

Ein unerwünschtes Abkühlen des erwärmten Prepregs - und somit eine für das erfindungsgemäße Verfahren nachteilige Änderung der Temperatur - kann verhindert werden, wenn das Umformwerkzeug erwärmt und der Metallträger mit dem erwärmten Umformwerkzeug umgeformt wird. Auf diese Weise ist die Reproduzierbarkeit des Verfahrens weiter erhöhbar. Es wird festgehalten, dass zu diesem Zweck die Temperatur des Umformwerkzeugs von der Temperatur des Prepregs bzw. seiner Matrix abweichen kann. Vorstellbar ist weiter, dass die Werkzeuge des Umformwerkzeugs unterschiedliche Temperaturen aufweisen, um den Metallträger gezielt bereichsspezifisch zu temperieren oder einen Temperaturgradienten im Laminat einzustellen.

Die Zykluszeiten zum Umformen können reduziert werden, wenn das Prepreg nach dem gemeinsamen Umformen mit dem Metallträger drucklos gehärtet wird - und aufgrund dessen das Umformwerkzeug besonders rasch wieder entfernt werden kann.

Dadurch, dass vor dem oder beim Belegen des Metallträgers mit dem Prepreg eine Zwischenschicht auf den Metallträger aufgebracht wird, über die das Prepreg an den Metallträger angebunden wird, kann einerseits die Haftfestigkeit verbessert, andererseits auch ausgleichend auf thermische Spannungen eingewirkt werden. Diese Zwischenschicht sollte zumindest in jenem Bereich des Metallträgers vollflächig aufgebracht werden, der auch mit Prepreg belegt wird.

Die Schichtdicke der Zwischenschicht kann bevorzugt von 50 µm bis 1000 µm betragen, bevorzugt sind Schichtdicken von 80 µm bis 700 µm. Dickere Schichten, bevorzugt Schichtdicken von 500 µm bis 1000 µm können sich dadurch auszeichnen, dass diese zudem einen Schutz vor Korrosion bieten (Sperrschicht). Bei Anwendungen mit hohen Steifigkeitsanforderungen sind dünne Filme bevorzugt (bevorzugt <150 µm). Des Weiteren ist die Verarbeitungszeit, d. h. die Reaktionszeit relevant - was vor allem bei kürzeren Zykluszeiten zu beachten ist. Hierbei hat sich gezeigt, dass Zwischenschichten auf Basis von Polyethylen, Polypropylen und/oder mit Polyamid-Kern oder auch Zwischenschichten auf Co-Polyamid-Basis besonders gut geeignet sein können. Dies können beispielsweise Systeme der Firma Nolax, nämlich Produkte Cox 391, Cox 422, Cox 435, Systeme der Firma Evonik, nämlich das Produkt Vestamelt X1333-P1 oder Systeme der Firma Hexcel, nämlich die Produkte TGA25.01A bzw. DLS 1857 sein.

Um eine hohe Laminatqualität zu garantieren, kann vorgesehen sein, dass die Matrix des Prepregs beim Umformen mit einer Druckkraft belastet wird. Solch eine Druckbelastung kann beispielsweise erzeugt werden, wenn der mit Prepreg belegte und als Blech ausgebildete Metallträger durch Tiefziehen oder Strecktiefziehen umgeformt wird. Der Metallträger kann, beispielsweise durch Querspalten eines Metallbands erzeugt, auch als flaches Blech oder Platine ausgebildet sein.

Eine Faltenbildung bzw. ein Faserverzugs am Prepreg kann verhindert werden, wenn das Prepreg beim Umformen bereichsweise am Metallträger niedergehalten und dadurch dort am Metallträger fixiert wird. Durch diese lokale Fixierung von begrenzten Bereichen des mit Prepreg belegten Metallträgers, was beispielsweise mit Hilfe eines Matrizeneinsatzes erfolgen kann, kann beispielsweise das Prepreg entsprechend der jeweiligen Ausrichtung dessen Endlosfasern eine Beweglichkeit in anderen Richtungen zugelassen werden. Hierzu ist auch denkbar, dass das Umformwerkzeug eine Vielzahl an solchen Niederhaltern aufweist. Ein derartiger Niederhalter kann auch durch eine lokale Werkzeugspaltreduktion beispielsweise zwischen Matrize und Stempel geschaffen werden.

Die Gefahr einer Faltenbildung bzw. eines Faserverzug kann weiter reduziert werden, wenn das Prepreg beim Umformen im umformenden Eingriff mit nacheinander wirkenden Segmenten oder Gruppen von Segmenten einer Matrize und/oder eines Stempels eines Umformwerkzeugs steht. Damit kann ein verzögertes Wirken des Umformwerkzeugs auf das Prepreg erreicht werden - wodurch das Prepreg den plastischen Formänderungen des Metallträgers verbessert folgen kann.

Erweitert sich der Eingriffsbereich im Laufe des Umformvorgangs segmentweise oder gruppensegmentweise zu einem Rand des Metallträgers hin, können auf elegante Weise eventuelle Falten am Prepreg oder darin enthaltene Lufteinschlüsse in Richtung des Rands des Metallträgers ausgepresst werden. Mit Hilfe des Umformwerkzeugs kann damit beispielsweise auf ein nachträgliches Glattstreichens des Prepregs verzichtet werden.

Um das Tiefziehen oder auch Strecktiefziehen zu erleichtern, kann vorgesehen sein, dass der Metallträger bereichsweise mit mindestens einem Prepreg belegt wird. Dies kann die Reproduzierbarkeit des Verfahrens weiter erhöhen.

Vorstehende Vorteile können sich insbesondere dann einstellten, wenn 20 bis 40% einer der Flachseiten des Metallträgers mit Prepreg belegt sind.

Insbesondere kann sich das erfindungsgemäße Verfahren zur Herstellung eines Strukturbauteils eines Fahrzeugs eignen. Im Allgemeinen wird erwähnt, dass ein Strukturbauteil ein Bauteil einer tragenden Struktur eines Fahrzeugs, insbesondere eines Kraftfahrzeugs, eines Straßenfahrzeugs, eines Transportfahrzeugs, eines Schienenfahrzeugs, eines Luftfahrzeugs oder eines Raumfahrzeugs sein kann. Ein Strukturbauteil kann beispielsweise als ein Seitenschweller, als eine A-Säule, als eine B-Säule, als eine C-Säule, als ein Querträger oder als ein Längsträger ausgebildet sein.

### Kurze Beschreibung der Zeichnung

In den Figuren wird beispielsweise das erfindungsgemäße Verfahren zur Herstellung eines Halbzeugs oder Bauteils näher dargestellt. Es zeigen
- Fig. 1: ein Ablauf des erfindungsgemäßen Verfahrens, bei welchem ein Tiefziehwerkzeug zum Umformen eines mit einem Prepreg verbundenen Metallträgers eingesetzt wird,
- Fig. 2: eine abgerissene und vergrößerte Schnittansicht auf ein gemäß dem Verfahren nach Fig. 1 hergestelltes Halbzeug und
- Fig. 3: eine von der Zeit abhängige Darstellung zur Viskosität und dem Vernetzungsgrads der Matrix des im Verfahren nach Fig. 1 und 2 verwendeten Prepregs.

### Weg zur Ausführung der Erfindung

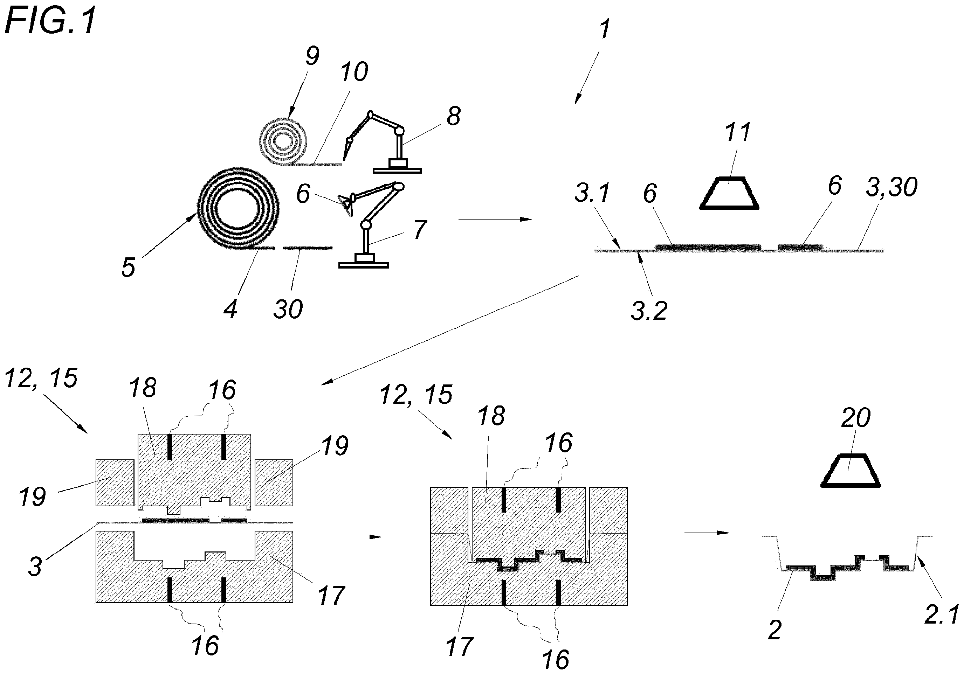

Gemäß dem nach Fig. 1 dargestellten Ablauf des erfindungsgemäßen Verfahrens 1 zur Herstellung eines Bauteils 2, beispielsweise eines Strukturbauteils 2.1 eines Fahrzeugs, wird im ersten Schritt ein als Blechzuschnitt 30 ausgeführter Metallträger 3, nämlich eine Platine 30, von einem Metallband 4 eines Coils 5 durch Querspalten erzeugt. Der Metallträger 3 wird auf eine Flachseite 3.1, der beiden Flachseiten 3.1, 3.2, die mit Prepreg 6 zu belegen ist, zuvor eventuell noch gereinigt und/oder chemisch vorbehandelt - was allerdings nicht näher dargestellt ist. Anschließend wird der Metallträger 3 mithilfe eines Roboters 7 mit mehreren Prepregs 6 belegt. Der Metallträger 3 kann hierzu eventuell vorerwärmt werden.

Zum Zuschneiden des Prepregs 6 ist beispielsweise ein Roboter 8 mit nicht näher dargestellten Schneidvorrichtungen, beispielsweise mit einer ultraschallerregten Schneide, vorgesehen, der dieses von einem, mit Kunststoffmatrix vorimprägnierten, zu einer Rolle 9 aufgewickelten Gewebe/Gelege/Geflecht/Gestrick/Gewirk etc. 10 (FVK) abtrennt. Das Gewebe/Gelege/Geflecht/Gestrick/Gewirk etc. 10 aus Endlosfasern ist im Ausführungsbeispiel bereits mit einer thermisch vernetzbaren, duroplastischen Matrix imprägniert.

Es ist aber auch im Allgemeinen vorstellbar - jedoch nicht dargestellt -, dass der Metallträger 3 mit vorkonditionierten Prepregs 6 belegt wird, zum Beispiel automatisiert, wie in Fig. 1 dargestellt, und/oder von Hand. Diese Prepregs 6 können - beispielsweise zu einem Stack gestapelt - bereits in ihren Abmessungen, in der Dichte, in der Anzahl an Lagen und/oder mit einer Zwischenschicht usw. vorkonditioniert sein.

Nach diesem Belegen wird der damit belegte Metallträger 3 mithilfe einer Wärmequelle 11 bestrahlt - und dadurch die Vernetzung der Matrix gezielt eingestellt. Diese Vernetzung der Matrix erfolgt drucklos und wird bei Verwendung eines vorimprägnierten Gewebe/Gelege/Geflecht/Gestrick/Gewirk etc. 10 durch dessen Erwärmen von 80°C bis 200°C, bevorzugt 100°C bis 180°C, mit einer Aufheizrate von 1 bis 40°C/min, bevorzugt 5 bis 25 °C/min, durchgeführt - um damit einen Vernetzungsgrad α vor dem Umformen von 4 bis 15 % einzustellen. Anstatt der als IR oder NIR Strahler dargestellten Wärmequelle 11 ist beispielsweise auch ein Durchlaufofen vorstellbar, was im Ausführungsbeispiel allerdings nicht näher dargestellt ist.

Anschließend wird der belegte Metallträger 3 in ein Umformwerkzeug 12 eingebracht und umgeformt.

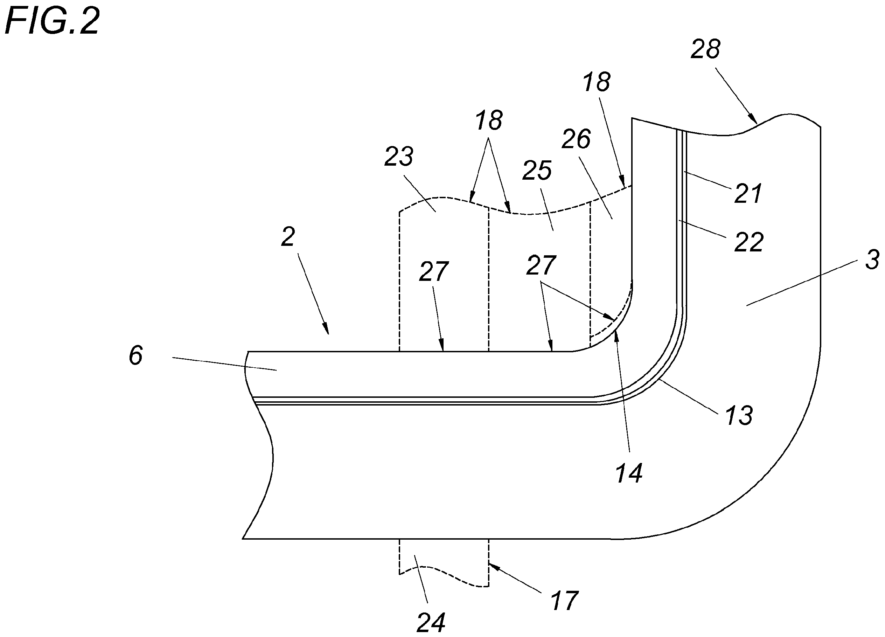

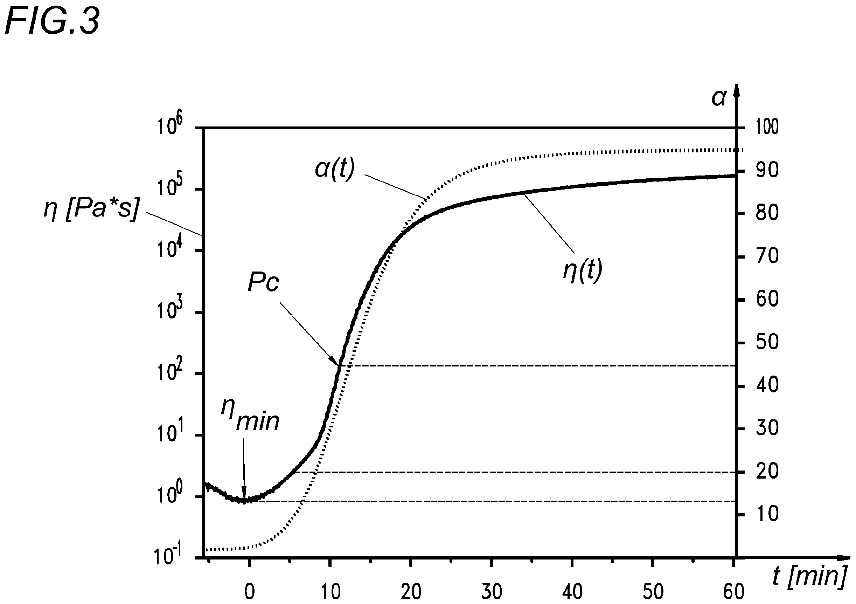

Erfindungsgemäß erfolgt dieses Umformen in Abstimmung mit der Vorvernetzung der duroplastischen Matrix des Prepregs 6, wie dies der Fig. 3 zu entnehmen ist. Hierzu wird diese Matrix in einen ihrem Viskositätsminimum ηₘᵢₙ nachfolgenden Viskositätszustand η übergeführt und noch vor Erreichen ihres Gelierpunkts Pc gemeinsam mit dem Metallträger 3 mithilfe des Umformwerkzeugs 12 umgeformt. Das Umformwerkzeug 12 wird zu diesem Zweck von einer offenen in eine geschlossene Stellung übergeführt. Die vorteilhafte Mitumformung der duroplastischen Matrix mit dem Metallträger 3 ist erfindungsgemäß möglich, da das sich im beschriebenen, erfindungsgemäßen Zustand verwendete Prepreg 6 den plastischen Formänderungen durch das Umformen folgen kann. Die Endlosfasen des Prepregs 6 sind nämlich noch gegenüber dem Metallträger 3 relativ im Prepreg 6 beweglich. Die Matrix des Prepreg 6 befindet sich in einem ihrem Viskositätsminimum ηₘᵢₙ nachfolgenden Viskositätszustand η, wodurch ein Bruch der Endlosfasern bzw. eine Delamination der Faserverstärkung am Metallträger 3 beim Umformen nicht eintritt - wie dies in Fig. 2 näher zu erkennen ist. Erfindungsgemäß ist damit eine gemeinsame Umformung mit Biegeradien 13 am Metallträger 3 in dessen von Prepreg 6 freien Bereichen als auch in seinen mit Prepreg 6 belegten Bereichen 14 möglich.

Wie in Fig. 1 zu erkennen wird daher der Metallträger 3 nur bereichsweise mit Prepreg 6 belegt, und zwar auf einer Flachseite 3.1 zu 20% bis 40%, was das gemeinsame Umformen deutlich erleichtert. Der mit Prepreg 6 belegte Bereich 14 der Flachseite 3.1 ist daher flächenmäßig kleiner als die gesamte Fläche der Flachseite 3.1.

Die Darstellung nach Fig. 3 bezieht sich auf ein folgendes Faserverbundmaterial:

| | |
|---|---|
| Metallträger: | Stahlblech: Blechdicke 0,81mm |
| Laminat: | unidirektional, vier Lagen von Prepreg |
| Prepreg: | Endlosfasern mit einem Faseranteil von 57% in der Matrix Dicke: 0,22 mm |
| Matrix: | duroplastische Basis (SGL Type E201: modifiziertes Epoxidharzsystem) |
| | ηₘᵢₙ = 0,9 Pa*s |
| | Pc = 45% |
| Zwischenschicht: | 100 µm Polypropylen |

Der Vernetzungsgrad α der Matrix wurde mittels Differential Scanning Calorimetry (DSC) gemessen nach ISO 11357-5:2013 bestimmt.

Anstatt des Stahlblechs ist auch ein Blech aus einer Aluminiumlegierung beispielsweise der 6xxx Reihe denkbar.

Nach Fig. 1 ist beispielsweise ein Tiefziehwerkzeug 15 als Umformwerkzeug 12 dargestellt, um damit den belegten Metallträger 3 umzuformen bzw. tiefzuziehen. Es ist aber auch durchaus vorstellbar, dass der Metallträger 3 mit einem nicht dargestellten Umformwerkzeug einem kombinierten Streck- und Tiefziehen unterworfen wird.

Um die Gefahr eines Ausquetschens der duroplastischen Matrix des Prepregs 6 beim Umformen zu reduzieren, wird diese Matrix wie erwähnt auf 4 bis 15 % vorvernetzt, bevor das Umformwerkzeug 12 auf das Prepreg 6 Kräfte ausübt - was wie in Fig. 1 dargestellt eintritt, wenn das Umformwerkzeug 12 von seiner offenen in dessen geschlossenen Stellung übergeführt wird. Im Allgemeinen wird erwähnt, dass sich zur Messung der Vernetzung mittels Differential Scanning Calorimetry (DSC) besonders das isotherme Verfahren nach ISO 11357-5:2013 eignen kann.

Im beheizten Umformwerkzeug 12 wird der Vernetzungsgrad α der Matrix ausgehend von 4 bis 15 % vor dem Umformen auf 20 bis 45 %, vorzugsweise auf 25 bis 40 %, beim Umformen eingestellt, welche Grenzen 20 bis 45 % strichliert der Fig. 3 eingezeichnet wurden. Solche ein Einstellten kann beispielsweise durch Temperatur und/oder Zeit erfolgen. Danach wird das Bauteil 2 dem Umformwerkzeug 12 entnommen. Vorzugsweise erfolgt die Entnahme des Bauteils 2 aus dem Umformwerkzeug 12 bei oder nach Erreichen des Gelierpunkts der jeweiligen Matrix. Dies ermöglicht bei ähnlicher Laminatqualität am Prepreg 6 eine stark verkürzte Zykluszeit gegenüber bekannten Verfahren und stellt die ausreichende Eigenstabilität des Matrixsystems mit den Fasern sicher.

Mit einem erwärmten, also gezielt temperierten Umformwerkzeug 12 kann zudem sichergestellt werden, dass beim Umformen die duroplastische Matrix auf einer Temperatur von 120 bis 220°C gehalten wird, um das Bauteil 2 dem Umformwerkzeug durch schnellere Vernetzung früher entnehmen und das Verfahren so verkürzen zu können. Vielfach konnte sich eine Temperatur von 150 bis 180°C auszeichnen. Zum Beheizen des Umformwerkzeugs 12 bzw. Tiefziehwerkzeugs 15 weist dieses eine elektrische Heizung 16 auf, die Matrize 17 und Stempel 18 des Umformwerkzeugs 12 erwärmt. Eine Heizung für den Niederhalter 19 ist nicht dargestellt, was aber ebenso vorstellbar ist. Beispielsweise kann durch unterschiedlich temperierte Bereiche ein Temperaturgradient in der Matrix bzw. am Prepreg 6 eigestellt werden, um physikalische und chemische Parameter - wie beispielswese Haftfestigkeit, Viskositätszustand η etc. - genau einstellen zu können.

Nach dem Umformen wird das Bauteil 2 dem Umformwerkzeug 12 entnommen und die Matrix des Prepregs 6 außerhalb des Umformwerkzeugs 12 drucklos weiter gehärtet - und zwar mit einer weiteren Wärmequelle 20, die nach Fig. 1 zu erkennen ist. Hierzu ist unter anderem wiederum ein nicht dargestellter Durchlaufofen vorstellbar. Vorzugsweise wird diese weitere Aushärtung durch die Wärmequelle 20 mit einer Temperatur von 100 bis 200 Grad Celsius (°C) durchgeführt, um damit beispielsweise Eigenspannungen durch das anschließende Abkühlen bei Raumtemperatur zu reduzieren. Vielfach konnte sich eine Temperatur von 120 bis 150 °C

Der zu belegende Metallträger 3 weist unter anderem auch eine Schutzbeschichtung 21, beispielsweise eine Zink- oder Zinklegierungsschicht, auf - wie diese nach Fig. 2 erkannt werden kann. Auf diese Schutzbeschichtung 21 bzw. auf die Flachseite des Metallträgers 3 wird im mit Prepreg 6 vollflächig belegten Bereich eine Zwischenschicht 22 aufgebracht. Diese Zwischenschicht 22 wird durch Auftragen eines Polyamid-basierten Haftvermittlers auf den Metallträger 3 erzeugt. Über diese Zwischenschicht 22 kann das Prepreg 6 an den Metallträger 3 äußerst fest und spannungsarm angebunden werden.

Das Prepreg 6 wird beim Umformen bereichsweise am Metallträger 3 niedergehalten und auf diese Weise dort am Metallträger 3 fixiert - wie dies in der Fig. 2 angedeutet ist. Das Segment 23 der Matrize 17 drückt das Prepreg 6 an den Metallträger 3 an, welcher durch einen beispielsweise dargestellten Gegenhalter 24 der Matrize 17 in diesem Bereich stabilisiert wird. Faltenbildung bzw. Faserverzug am Prepreg wird auf diese Weise vermieden.

Auch steht das Prepreg 6 beim Umformen im umformenden Eingriff mit nacheinander wirkenden Segmenten 25, 26 der Matrize 17 des Umformwerkzeugs 12. Dies kann in Fig. 2 daran erkannt werden, dass ein Segment 26 der Matrize 17 im Gegensatz zu Segment 25 noch nicht vollflächig am Prepreg 6 anliegt. Zudem ist an der Abfolge der Segmente 25, 26 zu erkennen, dass sich der Eingriffsbereich 27 im Laufe des Umformvorgangs segmentweise zum Rand 28 des Metallträgers 3 hin erweitert. Damit kann über das segmentierte Umformwerkzeug 12 eine Art Glattstreichen des Prepregs beim Umformen ermöglicht werden, was die Ausbildung von Falten und Lufteinschlüssen am Prepreg reproduzierbar ausschließt.

## Patentansprüche

1. Verfahren zur Herstellung eines Halbzeugs oder Bauteils (2), bei dem
ein als Blech oder Platine (30) ausgebildeter Metallträger (3) mit mindestens einem Prepreg (6), aufweisend eine thermisch vernetzbare, duroplastische Matrix mit Endlosfasern, belegt,
die duroplastische Matrix des Prepregs (6) durch Erwärmen vorvernetzt und der mit dem vorvernetzten Prepreg (6) belegte Metallträger (3) zu einem Halbzeug oder Bauteil (2) durch Tiefziehen oder Strecktiefziehen umgeformt wird, wobei beim Vorvernetzen der duroplastischen Matrix des Prepregs (6) dessen Matrix in einen ihrem Viskositätsminimum (ηₘᵢₙ) nachfolgenden Viskositätszustand (η) übergeführt und noch vor Erreichen ihres Gelierpunkts (Pc) das Prepreg (6) gemeinsam mit dem Metallträger (3) umgeformt wird.

2. Verfahren nach Anspruch 1, **dadurch gekennzeichnet, dass** vor dem Umformen der Vernetzungsgrad (a) der duroplastischen Matrix auf 4 bis 15 % eingestellt wird.

3. Verfahren nach Anspruch 1 oder 2, **dadurch gekennzeichnet, dass** beim Umformen der Vernetzungsgrad (a) der duroplastischen Matrix auf 20 bis 45 % eingestellt wird.

4. Verfahren nach Anspruch 3, **dadurch gekennzeichnet, dass** beim Umformen der Vernetzungsgrad (a) der duroplastischen Matrix auf 25 bis 40 % eingestellt wird.

5. Verfahren nach einem der Ansprüche 1 bis 4, **dadurch gekennzeichnet, dass** beim Umformen die duroplastische Matrix auf 120 bis 220°C erwärmt wird.

6. Verfahren nach Anspruch 5, **dadurch gekennzeichnet, dass** beim Umformen die duroplastische Matrix auf 150 bis 180°C, erwärmt wird.

7. Verfahren nach einem der Ansprüche 1 bis 6, **dadurch gekennzeichnet, dass** das Umformwerkzeug (12) erwärmt und der Metallträger (3) mit dem erwärmten Umformwerkzeug (12) umgeformt wird.

8. Verfahren nach einem der Ansprüche 1 bis 7, **dadurch gekennzeichnet, dass** das Prepreg (6) nach dem gemeinsamen Umformen mit dem Metallträger (3) drucklos gehärtet wird.

9. Verfahren nach einem der Ansprüche 1 bis 8, **dadurch gekennzeichnet, dass** vor dem oder beim Belegen des Metallträgers (3) mit dem Prepreg (6) eine Zwischenschicht (22) auf den Metallträger (3) aufgebracht wird, über die das Prepreg (6) an den Metallträger (3) angebunden wird.

10. Verfahren nach Anspruch 1 bis 9, **dadurch gekennzeichnet, dass** das Prepreg (6) beim Umformen bereichsweise am Metallträger (3) niedergehalten und dadurch dort am Metallträger (3) fixiert wird.

11. Verfahren nach Anspruch 10, **dadurch gekennzeichnet, dass** das Prepreg (6) beim Umformen im umformenden Eingriff mit nacheinander wirkenden Segmenten (23, 25, 26) oder Gruppen von Segmenten (24, 25, 26) einer Matrize (17) und/oder eines Stempels (18) des Umformwerkzeugs (12) steht.

12. Verfahren nach Anspruch 11, **dadurch gekennzeichnet, dass** sich der Eingriffsbereich (27) im Laufe des Umformvorgangs segmentweise oder gruppensegmentweise zu einem Rand des Metallträgers (3) hin erweitert.

13. Verfahren nach einem der Ansprüche 1 bis 12, **dadurch gekennzeichnet, dass** der Metallträger (3) bereichsweise mit mindestens einem Prepreg (6) belegt wird.

14. Verfahren nach Anspruch 13, **dadurch gekennzeichnet, dass** 20 bis 40% einer der Flachseiten (3.1, 3.2) des Metallträgers (3) mit Prepreg (6) belegt sind.

15. Verfahren nach einem der Ansprüche 1 bis 14 zur Herstellung eines Strukturbauteils (2.1) eines Fahrzeugs.

## Claims

1. A method for manufacturing a semifinished product or part (2), in which
a metal support (3) embodied as a metal sheet or blank (30) is covered with at least one prepreg (6) containing a thermally cross-linkable thermosetting matrix with endless fibers,
the thermosetting matrix of the prepreg (6) is pre-cross-linked by heating, and the metal support (3) covered with the pre-cross-linked prepreg (6) is formed into a semifinished product or part (2) by means of deep drawing or stretch deep drawing,
wherein
during the pre-cross-linking of the thermosetting matrix of the prepreg (6), its matrix is transferred into a viscosity state (η) that is higher than its minimum viscosity (ηₘᵢₙ) and prior to reaching its gel point (Pc), the prepreg (6) is formed together with the metal support (3).

2. The method according to claim 1, **characterized in that** before the forming, the degree of cross-linking (α) of the thermosetting matrix is set to 4 to 15%.

3. The method according to claim 1 or 2, **characterized in that** during the forming, the degree of cross-linking (α) of the thermosetting matrix is set to 20 to 45%.

4. The method according to claim 3, **characterized in that** during the forming, the degree of cross-linking (α) of the thermosetting matrix is set to 25 to 40%.

5. The method according to one of claims 1 through 4, **characterized in that** during the forming, the thermosetting matrix is heated to 120 to 220°C.

6. The method according to claim 5, **characterized in that** during the forming, the thermosetting matrix is heated to 150 to 180°C.

7. The method according to one of claims 1 through 6, **characterized in that** the forming tool (12) is heated and the metal support (3) is formed by the heated forming tool (12).

8. The method according to one of claims 1 through 7, **characterized in that** after the combined forming, the prepreg (6) undergoes unpressurized curing together with the metal support (3).

9. The method according to one of claims 1 through 8, **characterized in that** before or during the covering of the metal support (3) with the prepreg (6), an intermediate layer (22) is applied to the metal support (3), which bonds the prepreg (6) to the metal support (3).

10. The method according to claim 1 through 9, **characterized in that** during the forming, the prepreg (6) is held down on the metal support (3) in some regions and is thus affixed to the metal support (3) there.

11. The method according to claim 10, **characterized in that** during the forming, the prepreg (6) is engaged in a forming way by segments (23, 25, 26) or groups of segments (24, 25, 26) of a female die (17) and/or a male die (18) of the forming tool (12).

12. The method according to claim 11, **characterized in that** in the course of the forming procedure, the engagement region (27) widens out in segments or groups of segments toward an edge of the metal support (3).

13. The method according to one of claims 1 through 12, **characterized in that** the metal support (3) is covered in some regions with at least one prepreg (6).

14. The method according to claim 13, **characterized in that** 20 to 40% of one of the flat sides (3.1, 3.2) of the metal support (3) is covered with prepreg (6).

15. The method according to one of claims 1 through 14 for manufacturing a structural component (2.1) of a vehicle.

## Revendications

1. Procédé de fabrication d'un produit semi-fini ou d'un élément structural (2) dans lequel
un support métallique (3) sous la forme d'une tôle ou d'une platine (30) est revêtu d'au moins un préimprégné (6) présentant une matrice thermodurcissable réticulable thermiquement à fibres continues,
la matrice thermodurcissable du préimprégné (6) est préréticulée par chauffage et le support métallique (3) revêtu du préimprégné préréticulé (6) est formé en un produit semi-fini ou un élément structural (2) par emboutissage ou emboutissage-étirage,
dans lequel
lors de la préréticulation de la matrice thermodurcissable du préimprégné (6), sa matrice est mise dans un état de viscosité (η) qui suit sa viscosité minimale (ηₘᵢₙ) et le préimprégné (6) est formé en commun avec le support métallique (3) avant que son point de gélification (Pc) soit atteint.

2. Procédé selon la revendication 1, **caractérisé en ce que** le degré de réticulation (a) de la matrice thermodurcissable est réglé à une valeur de 4 à 15 % avant le formage.

3. Procédé selon la revendication 1 ou 2, **caractérisé en ce que** le degré de réticulation (a) de la matrice thermodurcissable est réglé à une valeur de 20 à 45 % pendant le formage.

4. Procédé selon la revendication 3, **caractérisé en ce que** le degré de réticulation (a) de la matrice thermodurcissable est réglé à une valeur de 25 à 40 % pendant le formage.

5. Procédé selon l'une des revendications 1 à 4, **caractérisé en ce que** la matrice thermodurcissable est chauffée à une température de 120 à 220 °C pendant le formage.

6. Procédé selon la revendication 5, **caractérisé en ce que** la matrice thermodurcissable est chauffée à une température de 150 à 180 °C pendant le formage.

7. Procédé selon l'une des revendications 1 à 6, **caractérisé en ce que** l'outil de formage (12) est chauffé et le support métallique (3) est formé avec l'outil de formage chauffé (12).

8. Procédé selon l'une des revendications 1 à 7, **caractérisé en ce que** le préimprégné (6) est durci sans pression après le formage en commun avec le support métallique (3).

9. Procédé selon l'une des revendications 1 à 8, **caractérisé en ce qu'**avant ou pendant le revêtement du support métallique (3) avec le préimprégné (6), une couche intermédiaire (22) est appliquée sur le support métallique (3), par laquelle le préimprégné (6) est lié au support métallique (3).

10. Procédé selon les revendications 1 à 9, **caractérisé en ce que**, pendant le formage, le préimprégné (6) est maintenu sur le support métallique (3) dans certaines zones et y est ainsi fixé sur le support métallique (3).

11. Procédé selon la revendication 10, **caractérisé en ce que**, pendant le formage, le préimprégné (6) est en engagement de formage avec des segments (23, 25, 26) ou groupes de segments (24, 25, 26) d'une matrice (17) et/ou d'un poinçon (18) de l'outil de formage (12) agissant successivement.

12. Procédé selon la revendication 11, **caractérisé en ce que**, au cours du processus de formage, la zone d'engagement (27) s'élargit par segments ou par groupes de segments vers un bord du support métallique (3).

13. Procédé selon l'une des revendications 1 à 12, **caractérisé en ce que** le support métallique (3) est revêtu dans certaines zones d'au moins un préimprégné (6).

14. Procédé selon la revendication 13, **caractérisé en ce que** 20 à 40 % de l'un des côtés plats (3.1, 3.2) du support métallique (3) sont revêtus de préimprégné (6).

15. Procédé selon l'une des revendications 1 à 14, destiné à la fabrication d'un élément structural (2.1) d'un véhicule.
